# DEMANDE DE BREVET EUROPEEN

(11) **EP 4 371 819 A1**
(43) Date de publication de la demande: **22.05.2024**
(21) Numéro de dépôt: 23210438.0
(22) Date de dépôt: 16.11.2023
(51) Int. Cl.: B60N 3/00, B60N 3/10

(54) **EQUIPEMENT D'UN VÉHICULE AUTOMOBILE**

(30) Priorité: 17.11.2022 FR 2211962
(71) Demandeur: Renault s.a.s, 92100 Boulogne Billancourt (FR)
(72) Inventeur: BEZEAULT, Loic, 78280 GUYANCOURT (FR); DUCHENE, Vincent, 78280 GUYANCOURT (FR)

(57) **Abrégé**

Equipement (1) d'un véhicule automobile (100), l'équipement comprenant :
- au moins deux éléments de liaison d'un premier type (141, 142) alignés selon un premier axe transversal (10), destinés à un montage en rotation de l'équipement (1) autour du premier axe transversal (10) ;
- au moins un élément de clippage d'un premier type (151, 152) agencé selon une direction de clippage (X1) perpendiculaire au premier axe transversal (10).

## Description

L'invention concerne un équipement d'un véhicule automobile. L'invention concerne en outre une structure de fixation pour véhicule automobile. L'invention concerne également un agencement pour véhicule automobile. L'invention porte aussi sur un véhicule automobile équipé d'un tel agencement.

Certains véhicules automobiles peuvent être équipés d'une tablette permettant à un usager d'utiliser une surface sensiblement horizontale dans l'habitacle du véhicule.

Toutefois, les tablettes ou équipements existants présentent des inconvénients.

Le but de l'invention est de fournir un équipement d'un véhicule automobile et un agencement pour véhicule automobile remédiant aux inconvénients ci-dessus et améliorant les équipements et les agencements d'un véhicule automobile connus de l'art antérieur. En particulier, l'invention permet de réaliser agencement qui soit simple et fiable et qui permette une utilisation de la tablette en différentes zones du véhicule.

A cet effet, l'invention porte sur un équipement d'un véhicule automobile, l'équipement comprenant :
- au moins deux éléments de liaison d'un premier type alignés selon un premier axe transversal, destinés à un montage en rotation de l'équipement autour du premier axe transversal ;
- au moins un élément de clippage d'un premier type agencé selon une direction de clippage perpendiculaire au premier axe transversal.

Dans un mode de réalisation, l'élément de clippage du premier type comprend une languette élastique s'étendant selon la direction de clippage entre une première extrémité fixe et une deuxième extrémité libre, la deuxième extrémité étant mobile en rotation autour de la première extrémité selon un deuxième axe transversal parallèle au premier axe transversal.

Dans un mode de réalisation, la deuxième extrémité est plus distante du premier axe transversal que la première extrémité. De plus, la deuxième extrémité prend une première position clippée fixe, et une deuxième position non clippée mobile. En complément ou alternativement la deuxième extrémité comprend une surface d'appui permettant un actionnement par un utilisateur pour un déclippage de l'élément de clippage du premier type.

Dans un mode de réalisation, l'équipement comprend une ouverture adaptée pour un coincement de l'équipement sur un volant d'un véhicule automobile.

Dans un mode de réalisation, l'équipement est une tablette utilisable en tant que surface de dépose pour un usager du véhicule automobile, et a tablette s'étend dans un plan principal comprenant le premier axe transversal.

Dans un mode de réalisation, l'équipement comprend deux extensions selon la direction de clippage, les extensions comprenant des éléments de liaison du premier type et des éléments de clippage du premier type.

L'invention porte aussi sur une structure de fixation pour véhicule automobile, comprenant un élément de clippage d'un deuxième type, adapté pour collaborer avec un élément de clippage du premier type d'un équipement selon l'invention.

La structure de fixation peut comprendre en outre des éléments de liaison d'un deuxième type adaptés pour collaborer avec des éléments de liaison du premier type d'un équipement selon l'invention.

L'invention porte aussi sur un agencement pour fixation d'un équipement dans au moins deux zones distinctes d'un véhicule automobile, l'agencement comprenant un équipement selon l'invention, et au moins une zone donnée parmi les au moins deux zones distinctes étant équipée d'une structure de fixation selon l'invention.

Dans un mode de réalisation de l'agencement,
- au moins une zone de fixation comprend une structure de fixation selon l'invention, et
- les éléments de liaison du premier type de l'équipement collaborent avec les éléments de liaison du deuxième type de la structure de fixation.

Dans un mode de réalisation de l'agencement, une lamelle de l'équipement collabore avec une languette de la structure de fixation pour fixer l'équipement dans une position de rangement,
la position de rangement étant maintenue par les éléments de liaison du premier type de l'équipement collaborant avec les éléments de liaison du deuxième type de la structure de fixation,
la position de rangement étant atteinte après une rotation de l'équipement autour du premier axe transversal pour le positionner dans une position inclinée relativement à la direction de clippage.

Dans un mode de réalisation de l'agencement, la structure de fixation est fixée à une structure de siège du véhicule automobile, et la position de rangement de l'équipement correspond à une position repliée de l'équipement dans laquelle la surface principale de l'équipement est sensiblement parallèle à la structure de siège.

Dans un mode de réalisation, l'agencement comprend au moins un deuxième équipement choisi parmi :
- un porte-gobelet comprenant un élément de clippage du premier type et élément de liaison du premier type ;
- un support de téléphone portable comprenant un élément de clippage du premier type et une liaison rotule pour supporter un cadre sur lequel peut être attaché un téléphone portable ;
- un porte-cintre comprenant un élément de clippage du premier type et optionnellement un élément de liaison du premier type et éventuellement un crochet.

Les dessins annexés représentent, à titre d'exemple, un mode de réalisation d'un équipement selon l'invention.
La figure 1 représente un mode de réalisation d'un véhicule automobile équipé d'un équipement selon l'invention.
La figure 2 définit un repère orthonormé relatif au véhicule automobile selon l'invention.
La figure 3 est une première vue en perspective d'un équipement selon l'invention.
La figure 4 est une deuxième vue en perspective d'un équipement selon l'invention.
La figure 5 est une première vue de dessus d'un équipement selon l'invention.
La figure 6 est une deuxième vue de dessus d'un équipement selon l'invention.
La figure 7 est une vue de dessous d'un équipement selon l'invention.
La figure 8 est une vue en perspective d'une première zone de montage d'un équipement selon l'invention.
La figure 9 est une vue en perspective d'une deuxième zone de montage d'un équipement selon l'invention.
La figure 10 est une première vue en perspective d'une troisième zone de montage d'un équipement selon l'invention.
La figure 11 est une deuxième vue en perspective d'une troisième zone de montage d'un équipement selon l'invention.
La figure 12 est une vue de face d'une troisième zone de montage d'un équipement selon l'invention.
La figure 13 est une troisième vue en perspective d'une troisième zone de montage d'un équipement selon l'invention.
La figure 14 est une vue de dos d'une troisième zone de montage d'un équipement selon l'invention.
La figure 15 est une quatrième vue en perspective d'une troisième zone de montage d'un équipement selon l'invention.
La figure 16 est une première vue en perspective d'un deuxième mode de montage d'un agencement selon l'invention.
La figure 17 est une deuxième vue en perspective du deuxième mode de montage d'un agencement selon l'invention.
La figure 18 est une première vue en perspective d'un troisième mode de montage d'un agencement selon l'invention.
La figure 19 est une première vue en coupe du troisième mode de montage d'un agencement selon l'invention.
La figure 20 est une deuxième vue en perspective du troisième mode de montage d'un agencement selon l'invention.
La figure 21 est une deuxième vue en coupe du troisième mode de montage d'un agencement selon l'invention.
La figure 22 est une troisième vue en perspective du troisième mode de montage d'un agencement selon l'invention.
La figure 23 est une troisième vue en coupe du troisième mode de montage d'un agencement selon l'invention.
La figure 24 est une quatrième vue en perspective du troisième mode de montage d'un agencement selon l'invention.
La figure 25 est une quatrième vue en coupe du troisième mode de montage d'un agencement selon l'invention.
La figure 26 est une vue d'un premier et d'un deuxième équipements annexes aptes à se fixer à une structure de fixation selon l'invention.
La figure 27 est une vue d'un troisième équipement annexe apte à se fixer à une structure de fixation selon l'invention.
La figure 28 est une vue d'un quatrième équipement annexe apte à se fixer à une structure de fixation selon l'invention.

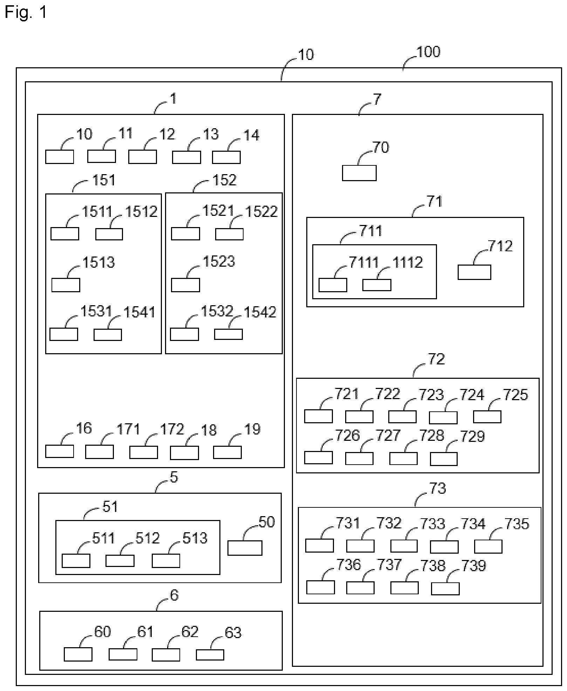

Un exemple d'un véhicule 100 équipé d'un agencement selon l'invention est décrit ci-après en référence à la figure 1.

Le véhicule automobile 100 est un véhicule automobile de n'importe quel type, notamment un véhicule de tourisme ou un véhicule utilitaire. L'agencement selon l'invention est également utilisable dans des camions, des bus, des avions ou des bateaux.

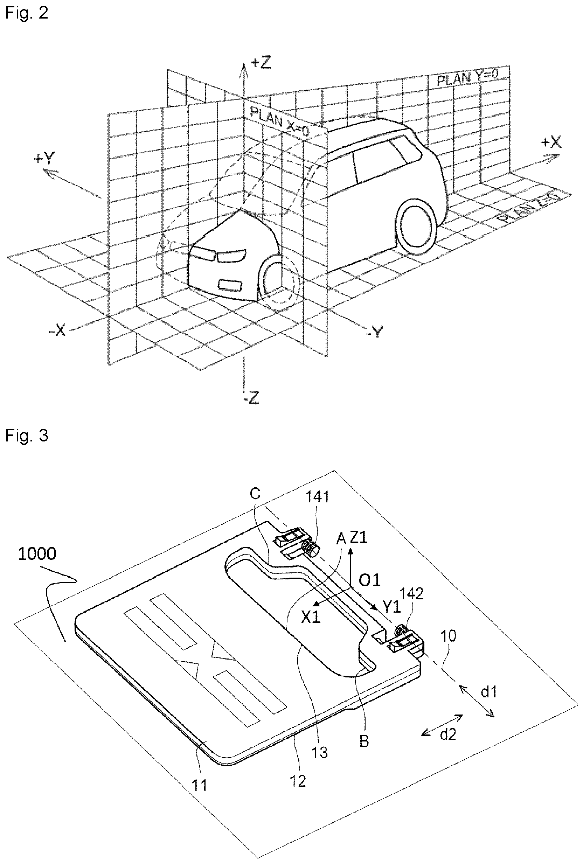

On définit un premier repère orthonormé direct (X, Y, Z) représenté par la figure 2, l'axe X étant parallèle à l'axe longitudinal du véhicule automobile 100 et orienté vers l'arrière du véhicule automobile 100, l'axe Y étant transversal et dirigé vers la droite du véhicule, et l'axe Z étant vertical et orienté vers le haut du véhicule.

Le véhicule automobile 100 comprend un habitacle 10, comprenant un volant 50, une planche de bord 60, et des sièges 70, notamment un siège conducteur et/ou au moins un siège passager avant.

Le véhicule comprend en outre un équipement 1 destiné à être fixé dans plusieurs zones du véhicule automobile 100.

Dans la suite du document, les termes « fixer », « monter », « accrocher » sont indifféremment utilisés pour désigner une fixation amovible de l'équipement 1 sur une structure de fixation fournie par le véhicule automobile 100. De la même façon, les termes « zone de fixation », « zone de montage », « zone d'accrochage » sont indifféremment utilisés pour désigner une zone du véhicule automobile 100 pourvue d'une structure de fixation pour l'accrochage de l'équipement 1.

Dans un mode de réalisation, les zones de montage de l'équipement 1 sont situées à l'intérieur ou à l'extérieur de l'habitacle du véhicule automobile 100. Notamment, dans le mode de réalisation présenté dans la suite du document, les zones de montage comprennent un emplacement conducteur 5, un emplacement passager avant 6 et un emplacement passager arrière 7 du véhicule automobile 100. Dans des modes de réalisation alternatifs, les zones de montage pourraient comprendre une zone d'un coffre, un panneau de porte latérale, un accoudoir central, une console centrale ou une zone extérieure du véhicule automobile 100.

Selon le mode de réalisation plus spécifiquement décrit ci-après, l'équipement 1 est une tablette 1 pour véhicule automobile. D'autres modes de réalisation de l'équipement 1 sont possibles, par exemple un clavier, un écran interactif, ou une console de jeu. Dans la suite du document, les termes « équipement 1 » ou « tablette 1 » sont indifféremment utilisés.

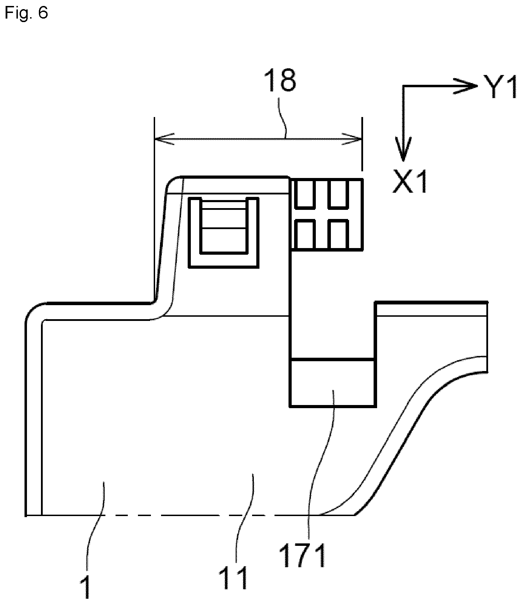

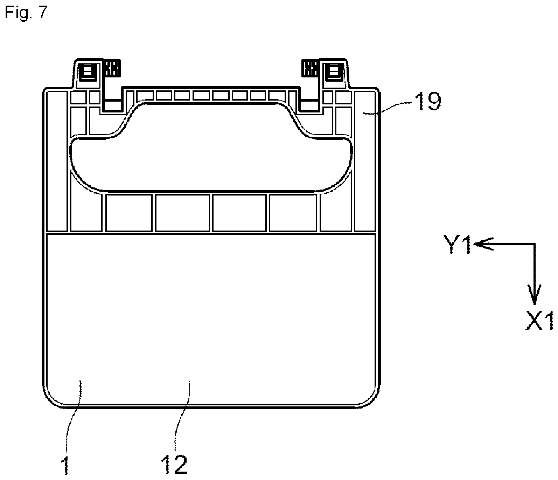

L'équipement 1 est décrit ci-après en référence aux figures 3 à 7.

L'équipement 1 comprend une surface principale 11 contenue dans un premier plan 1000 défini par le centre O1 et les axes X1 et Y1.

L'équipement 1 comprend :
- au moins deux éléments de liaison d'un premier type 141, 142 alignés selon un premier axe transversal 10, destinés à un montage en rotation de l'équipement autour du premier axe transversal 10 ;
- au moins un élément de clippage d'un premier type 151, 152 agencé selon une direction de clippage X1 perpendiculaire au premier axe transversal 10.

Sur la figure 3, on définit un deuxième repère orthonormé direct attaché à l'équipement 1, de centre O1 et d'axes X1, Y1 et Z1. Dans le mode de réalisation présenté, un plan 500 contenant le point O1 et les axes X1 et Z1 est un plan de symétrie de l'équipement 1.

Dans la suite du document, le terme « élément de clippage » est utilisé pour désigner un moyen de fixation contenant un clip permettant de fixer l'équipement 1 dans une zone de montage. Dans le mode de réalisation décrit, un clip est réalisé par un assemblage entre un élément de clippage d'un premier type 151, 152 disposé sur l'équipement 1, et un élément de clippage d'un deuxième type 61, 62, 721, 731 faisant partie d'un support de fixation.

Dans le mode de réalisation décrit,
- un élément de clippage du premier type est un clip mâle disposé sur l'équipement 1, et
- un élément de clippage du deuxième type est un clip femelle disposé sur un support de fixation.

Dans d'autres modes de réalisation non décrits dans ce document,
- un élément de clippage du premier type pourrait être un clip femelle disposé sur l'équipement 1, et
- un élément de clippage du deuxième type serait alors un clip mâle disposé sur un support de fixation.

Avantageusement, l'élément de clippage du premier type, ou élément de clippage mâle 151, 152 comprend une languette élastique 1511, 1521 s'étendant selon la direction de clippage X1 entre une première extrémité fixe 1531, 1532 et une deuxième extrémité libre 1541, 1542, la deuxième extrémité 1541, 1542 étant mobile en rotation autour de la première extrémité 1531, 1532 selon un deuxième axe transversal 20 parallèle au premier axe transversal 10.

Avantageusement, la deuxième extrémité 1541, 1542 est plus distante du premier axe transversal 10 que la première extrémité 1531, 1532. De plus, la deuxième extrémité 1541, 1542 prend une première position clippée fixe, et une deuxième position non clippée mobile.

Notamment, dans un mode de réalisation, la languette élastique 1511, 1521 de l'au moins un élément de clippage mâle 151, 152 comprend
- une zone surélevée 1512, 1522 sur laquelle se concentre la première force exercée lors d'un clippage de l'équipement sur une structure de fixation et/ou
- une surface d'appui 1513, 1523 permettant à un usager d'exercer une deuxième force opposée à la première force, la deuxième force facilitant le démontage de l'équipement 1.

La languette élastique 1511, 1521 est destinée à être comprimée lors de l'insertion du clip mâle 151, 152 dans un clip femelle 61, 62, 721, 731 d'un support de fixation. Dans certains modes de réalisation, le clip femelle 721, 731 d'une structure de fixation peut présenter un trou 722, 732 dans lequel la languette élastique 1511, 1521 d'un clip mâle peut s'insérer.

La languette élastique 1511, 1521 comprend avantageusement une zone surélevée 1512, 1522 sur laquelle se concentre la première force exercée par le clip mâle lors d'un clippage de l'équipement sur une structure de fixation. Dans le mode de réalisation décrit, la première force est sensiblement contenue dans un plan parallèle aux deuxième plan 2000.

En d'autres termes, la zone surélevée 1512, 1522 exerce ainsi un effort sur un logement, ou clip femelle, qui comprime la zone flexible, ce logement pouvant être réalisé notamment par un évidemment 61, 62 du tableau de bord 60 ou par une pièce de liaison 72, 73 fixée à une structure de siège. L'effort exercé par la zone surélevée 1512, 1522 sur le clip femelle s'oppose ainsi à un mouvement qui tendrait à extraire l'équipement 1 du clip femelle. La languette élastique 1511, 1521 peut en outre collaborer avec un trou 722, 732 du clip femelle. Dans ce cas, lorsque la zone 1512, 1522 est placée en face du trou 722, 732, l'effort exercé par la zone 1512, 1522 lui permet de se déployer dans le trou, renforçant ainsi la liaison entre l'équipement 1 et la pièce de liaison 72, 73.

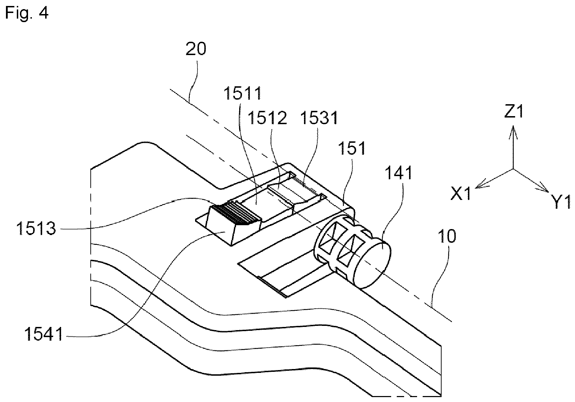

Dans un mode de réalisation illustré par les figures 3 et 4, la languette élastique 1511, 1521 peut en outre présenter une zone d'appui 1513, 1523 destinée à faciliter le démontage de l'équipement 1.

Lorsqu'un usager exerce un appui sur la zone 1513,1523 il diminue ou supprime l'effort exercé par la zone 1512, 1522, ce qui facilite le démontage de l'équipement 1 hors de la structure de fixation.

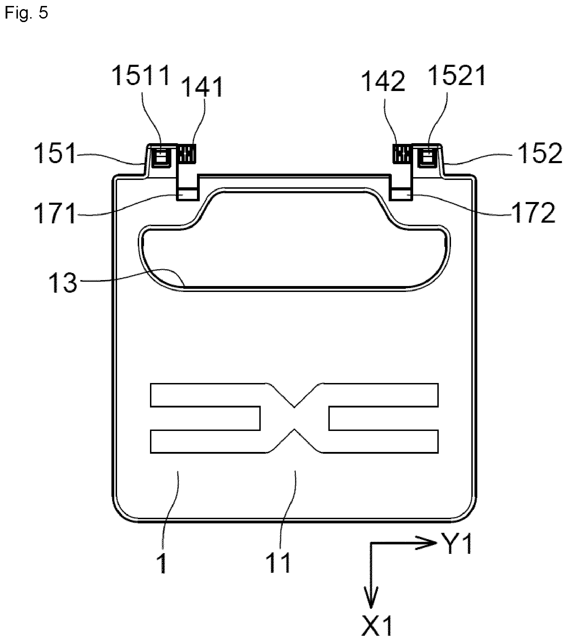

Dans un mode de réalisation alternatif, illustré notamment par les figures 5 à 7, la languette élastique 1511, 1521 ne présente pas de zone d'appui 1513. 1523. Un appui soutenu exercé par un usager sur l'extrémité 110 de l'équipement 1, dirigé vers le bas, et selon une direction perpendiculaire à la surface principale 11 permet de réduire l'effort exercé par la zone 1512, 1522 sur la structure de fixation, et ainsi de désengager la tablette 1 de la structure de fixation.

L'équipement 1 comprend en outre deux ergots cylindriques 141, 142 dont les axes sont confondus et orientés selon la direction Y1. Les deux ergots cylindriques 141, 142 ont pour rôle de collaborer avec des pièces de liaison 72, 73 décrites plus loin dans ce document, les pièces de liaison 72, 73 guidant un mouvement de rotation de l'équipement 1 autour de la direction Y1.

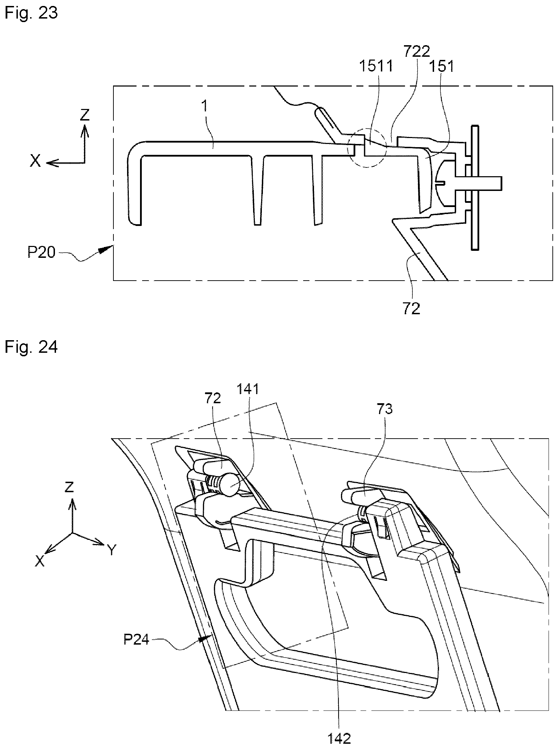

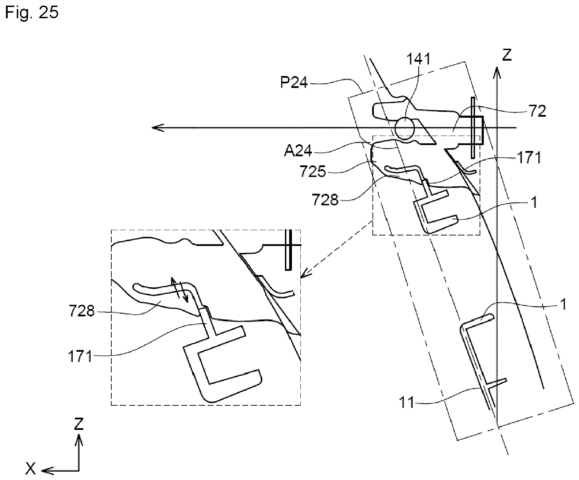

L'équipement 1 est également pourvue de deux lamelles 171, 172 respectivement destinés à collaborer avec une languette 728, 738 d'une pièce de liaison 72, 73, pour fixer la tablette 1 dans une position de rangement P24 illustrée par les figures 24 et 25.

Dans un mode de réalisation plus spécifiquement illustré par les figures 5 à 7, l'équipement 1 est une tablette qui s'étend dans un plan principal 1000 comprenant le premier axe transversal 10. Outre une surface de dépose, l'équipement 1 comprend deux extensions selon la direction de clippage X1, les extensions comprenant des éléments de liaison du premier type, ou ergots cylindriques 141, 142 et des éléments de clippage du premier type ou clips mâles 151, 152.

La tablette comprend un plateau de circonférence sensiblement carrée, présentant une surface principale 11, appelée dans la suite du document première face 11, la première face 11 étant lisse, et une deuxième face 12 alvéolée.

Notamment, dans un mode de réalisation, la tablette 1 est utilisable en tant que surface de dépose pour un usager du véhicule automobile 100. Du fait de sa surface lisse, la première face 11 est généralement destinée à être utilisée comme surface de dépose. Les alvéoles 19 de la deuxième face 12 ont pour première fonction d'alléger la tablette 1. Les alvéoles sont obtenues par la présence de croisillons formés par des renflement ou nervures sous la tablette. Ces croisillons permettent d'obtenir un renforcement de la tablette en zone d'accrochage et une meilleure rigidité. Ce choix de renforcement est, en effet, une solution d'allègement et de coût maitrisé en évitant de recourir à un renfort supplémentaire. Un usager de la tablette peut toutefois choisir d'utiliser la deuxième face alvéolée 12 comme surface de dépose. Il bénéficie alors d'une surface compartimentée permettant, par exemple, de maintenir des objets de façon sécurisée, en évitant leur glissement.

Dans un mode de réalisation, la longueur d'un côté de la tablette se situe autour de 300 millimètres. D'autres formes de la première et la deuxième faces sont envisageables, par exemple une forme rectangulaire, une forme courbe...

Dans un mode de réalisation, l'épaisseur de la tablette 1, c'est-à-dire la distance séparant la première face 11 et la deuxième face 12 est compris entre 1,5 et 2,5 millimètres. Les alvéoles de la deuxième face 12 permettent avantageusement de renforcer la tablette 1.

Dans un mode de réalisation, la tablette 1 est réalisée en matériau composite de type polypropylène, polyéthylène, polyamide, acrylonitrile butadiène styrène.

En complément, l'équipement 1, ou tablette 1, comprend en outre une ouverture 13 adaptée pour un coincement de l'équipement 1 sur un volant 5 du véhicule automobile 100. Avantageusement, l'ouverture 13 est proche de l'axe 10 de rotation de la tablette.

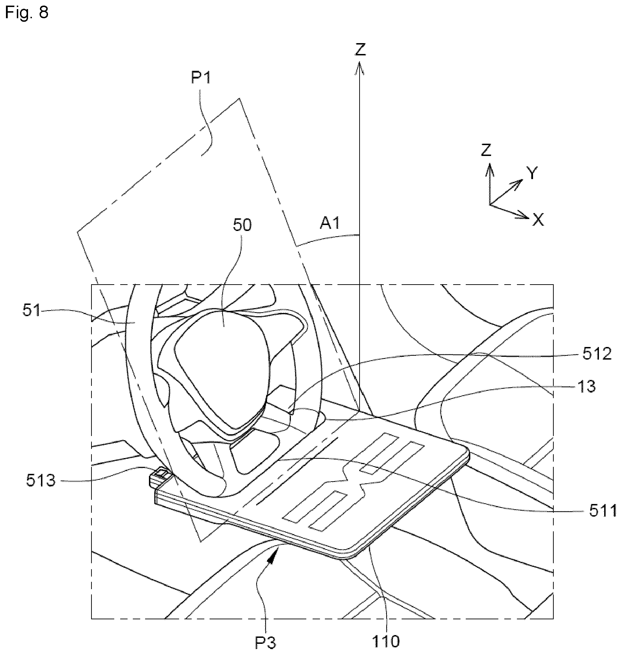

La figure 8 illustre une première zone de montage de l'équipement 1 correspondant à un emplacement conducteur 5 et dans lequel l'ouverture 13 collabore avec le volant 5 pour la fixation de l'équipement 1.

L'emplacement conducteur 5 est équipé d'un volant classique 50 de véhicule automobile présentant une structure circulaire 51 également nommé arceau 51.

On définit un plan P1 contenant la structure circulaire 51. Le plan P1 partage la structure circulaire 51 en une première et une deuxième surface, la première surface étant orientée vers l'arrière du véhicule automobile 100 et la deuxième surface étant orientée vers l'avant du véhicule automobile 100.

Dans le mode de réalisation décrit, la structure de fixation de l'emplacement conducteur 5 est réalisée par trois points de la structure circulaire 51, notamment un point 511 situé à une extrémité basse de la première surface, et deux points 512 et 513 de la deuxième surface, situés de part et d'autre du point 511.

Avantageusement, la position du volant 50 est réglable en hauteur, en inclinaison et en profondeur, ce qui permet de régler un angle A1 mesuré entre le plan P1 et l'axe vertical Z du véhicule automobile 100. De plus, le réglage de la position du siège conducteur permet de régler une distance D mesurée entre le plan P1 et le conducteur du véhicule. Ainsi, en calibrant la distance D et l'angle A1, le conducteur du véhicule peut modifier la position des points 511, 512, 513 relativement au siège conducteur, et placer l'équipement 1 dans une position sensiblement horizontale.

Outre le volant 50, le véhicule automobile 100 comprend d'autres structures de fixation, notamment une structure de fixation comprenant un élément de clippage du deuxième type, ou clip femelle 61, 62, 721, 731 adapté pour collaborer avec un élément de clippage du premier type, ou clip mâle 151, 152 d'un équipement 1 selon l'invention.

Avantageusement, le clip femelle 721, 731 présente une ouverture 722, 732 apte à collaborer avec une languette élastique d'un clip mâle 1511, 1521.

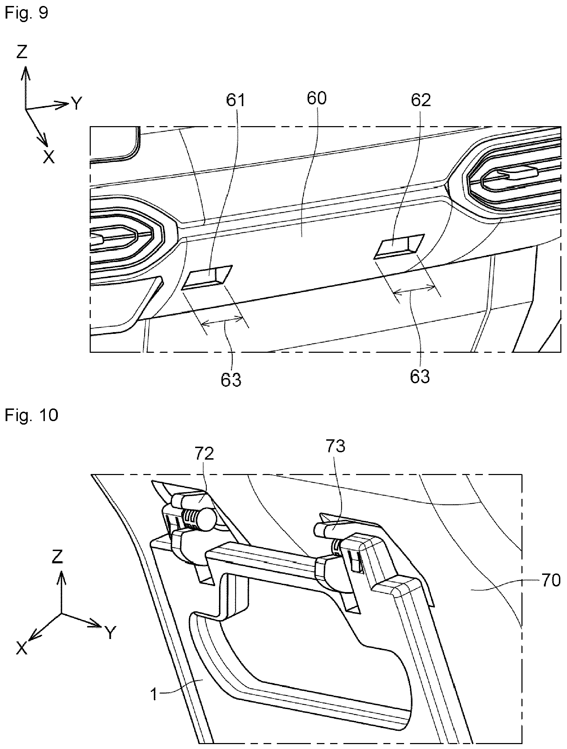

Une deuxième structure de fixation comprenant un élément de clippage femelle 61, 62 est décrit en référence à la figure 9. La figure 9 illustre une deuxième zone de montage de l'équipement 1, ou tablette 1, correspondant à un emplacement passager 6. L'emplacement passager avant 6 est équipé d'une planche de bord 60.

Dans le mode de réalisation décrit, la planche de bord 60, comprend deux évidements ou creux 61, 62 de forme sensiblement trapézoïdale et alignés sensiblement selon la direction Y. Dans le mode de réalisation décrit, les évidements 61, 62 sont des clips femelles. Avantageusement, les clips femelles 61, 62 peuvent présenter une ouverture (non représentée sur les figures) apte à collaborer avec une languette élastique d'un élément de clippage mâle 1511, 1521.

Les dimensions des clips femelles 61, 62, notamment une longueur 63 selon la direction Y, sont définies en fonction de la géométrie de l'équipement 1. En particulier, la longueur 63 d'un clip femelle 61, 62 du tableau de bord est avantageusement supérieure à la somme 18 d'une largeur du clip mâle 151, 152 et d'une longueur d'un ergot cylindrique 141, 142 raccordé au clip mâle 151, 152. En effet, lorsque la tablette est montée dans l'emplacement conducteur 5 ou dans l'emplacement passager avant 6, le mouvement de rotation de la tablette 1 autour de l'axe n'est pas possible. Les structures de fixation des emplacements 5 et 6 sont avantageusement définies de sorte à laisser un espace libre autour des ergots 141, 142 lors du montage de la tablette 1.

Avantageusement, la forme et l'orientation des surfaces d'un clip femelle 61, 62 permettent le maintien de la tablette 1 selon un plan sensiblement horizontal lors de son clippage au tableau de bord 6.

Afin de renforcer la tenue de la planche de bord 60, une fixation positive en prise avec la structure de planche (non visible) a été ajoutée au fond de chaque clip femelle. Le terme de « fixation positive » désigne l'ajout d'un élément de fixation supplémentaire entre deux pièces (par exemple entre la planche de bord et un clip femelle) permettant de renforcer la liaison entre les deux pièces. L'élément de fixation supplémentaire peut être, par exemple, une vis, un écrou, ou un rivet, etc...

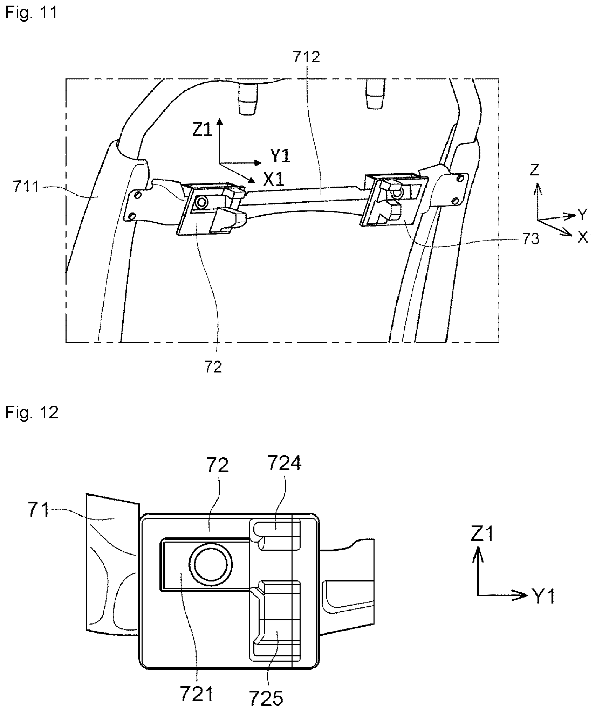

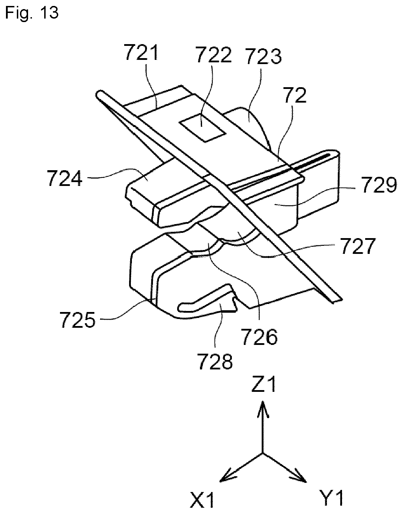

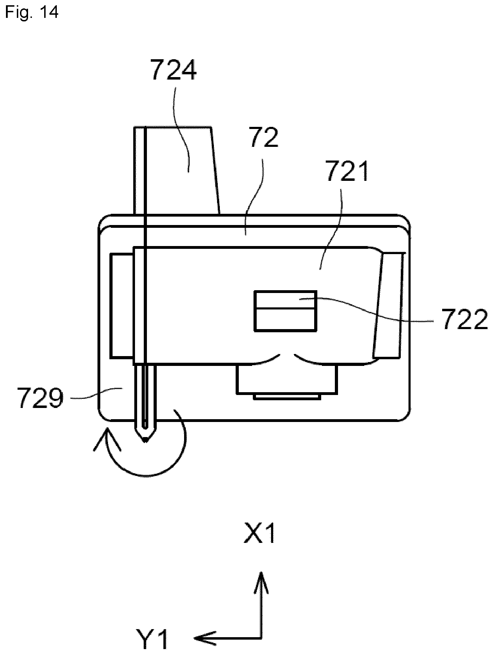

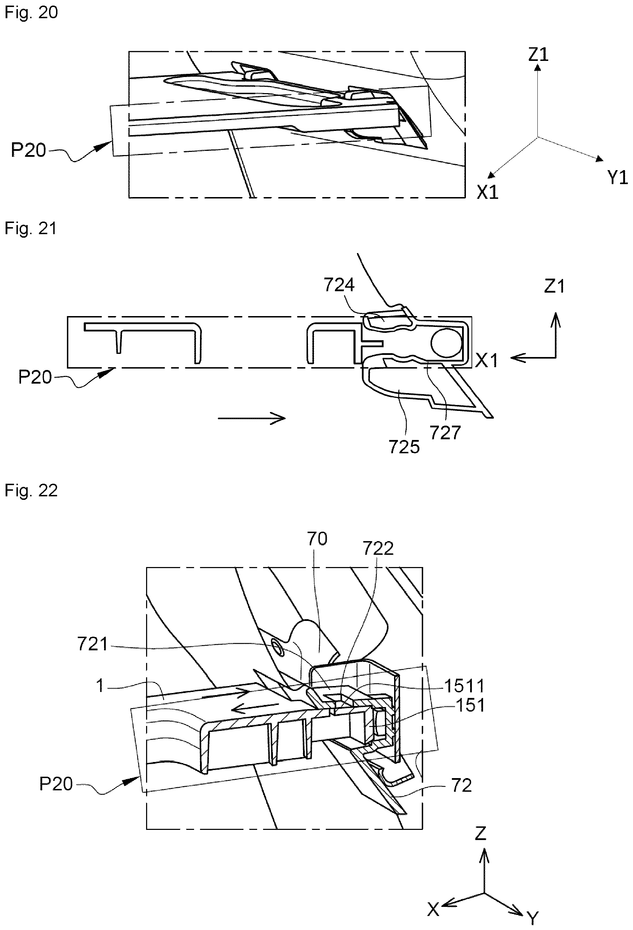

Une troisième structure de fixation 72, 73 comprenant un élément de clippage femelle 721, 731 est décrit en référence aux figures 11 à 15. Dans ce mode de réalisation, l'élément de clippage femelle 721, 731 présente une ouverture 722, 732 apte à collaborer avec une languette élastique d'un élément de clippage mâle 1511, 1521, comme cela est plus spécifiquement visible sur les figures 22 et 23.

Les figure 10 à 15 illustrent une troisième zone de montage, correspondant à un emplacement passager arrière 7. Un usager du véhicule automobile 100 installé à un emplacement passager arrière fait face à un siège 70 situé devant lui.

Le siège 70 comprend une structure de siège 71, plus spécifiquement représentée par la figure 11. La structure de siège 71 comprend une armature composée d'un arceau principal 711 présentant deux montants 7111, 7112 sensiblement verticaux et d'une portion transversale 712 fixée à chacun des deux montants 7111, 7112 de l'arceau 711. Le siège 70 comprend en outre deux pièces de liaison 72, 73 qui sont fixées à la portion transversale 712.

Les structures de fixation 72, 73 sont décrites en référence au repère orthonormé (X1, Y1, Z1) précédemment défini pour la description de l'équipement 1.

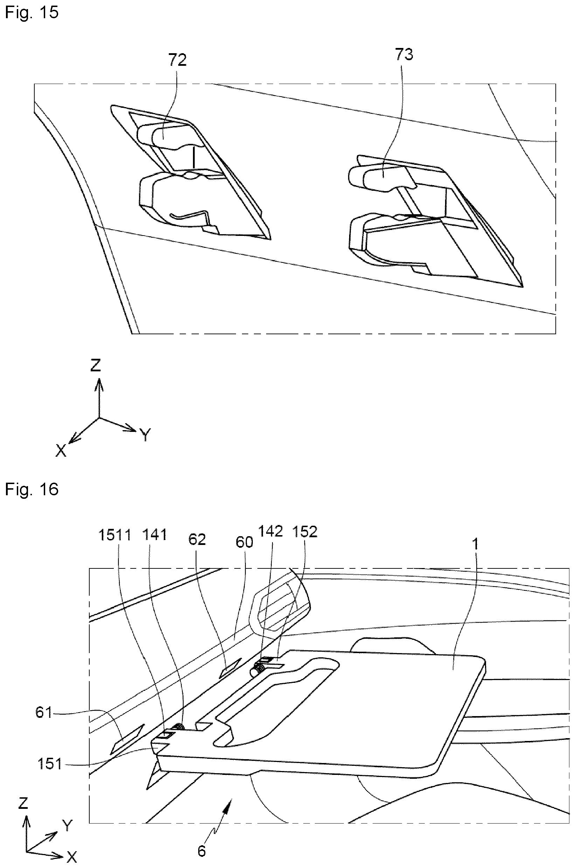

Comme cela est plus spécifiquement visible sur les figures 10 et 15, les deux pièces de liaison 72, 73 forment des mâchoires ou pinces qui sortent au moins partiellement de la garniture du siège 70.

Les deux pièces 72, 73 étant symétriques l'une par rapport à l'autre, seule la structure de la pièce 72 est décrite.

Un premier élément de la pièce 72 comprend une paroi 721 délimitant un volume creux de forme sensiblement trapézoïdale. La paroi 721 permet ainsi de réaliser un clip femelle destiné à collaborer avec un clip mâle 151, 152 de l'équipement 1. Une face supérieure de la paroi 721 est percée d'un trou rectangulaire 722 destiné à collaborer avec une languette élastique 1511 d'un clip mâle 151, 152 de l'équipement 1. De plus, la paroi 721 est reliée à un logement 723. Le logement 723 est prévu pour loger une tête d'une vis raccordant la pièce 72 à la portion transversale 712.

Ainsi la pièce 72 permet un clippage selon une première direction opposée à la direction X1.

De plus, un deuxième élément de la pièce 72 comprend un volume supérieur 724 et un volume inférieur 725 se faisant face et formant ensemble deux branches d'une pince, ou mâchoire, orientée sensiblement selon la direction X1. Le volume supérieur 724 et une première gouttière 726 du volume inférieur 725 délimitent ensemble un espace apte à guider un mouvement de rotation d'un ergot cylindrique 141 de la tablette 1 autour de l'axe Y1.

Ainsi, outre le clippage selon la première direction (opposée à la direction X1), la structure de fixation 72 comprend en une surface de guidage en rotation 726 destinée à guider un mouvement de rotation autour d'une deuxième direction Y1 perpendiculaire à la première direction.

Ainsi, dans des modes de réalisation, une structure de fixation selon l'invention peut comprendre des éléments de liaison d'un deuxième type 726, 736, notamment une surface de guidage en forme de gouttière, adaptés pour collaborer avec des éléments de liaison du premier type, notamment des ergots cylindriques 141, 142 d'un équipement 1 selon l'invention

De plus, la paroi 721 et une deuxième gouttière 727 du volume inférieur 725 définissent ensemble un volume de dégagement destiné à accueillir un ergot 141 de la tablette 1, aucune contrainte n'étant alors exercée sur l'ergot 141. Les gouttières 726, 727 matérialisent respectivement un premier et un deuxième cran d'insertion de la tablette 1 dans la pièce de liaison 72.

La pièce 72 comprend en outre une languette flexible 728, ou patte flexible 728, disposée sur une face inférieure du volume inférieur 725. La languette flexible 728 participe à la fixation de la tablette 1 dans une position de rangement P24, comme cela sera détaillé plus loin dans ce document.

Pour des raisons de contraintes de fabrication, les pièces 72, 73 sont creuses et présentent une ouverture latérale. Une face latérale 729, 739 est donc avantageusement rapportée sur chaque pièce 72, 73. La face latérale 729 permet ainsi d'améliorer la finition des pièces 72, 73.

L'invention porte en outre sur un agencement pour fixation d'un équipement dans au moins deux zones distinctes d'un véhicule automobile,
- l'agencement comprenant un équipement 1 selon l'invention, et
- au moins une zone donnée parmi les au moins deux zones distinctes étant équipée d'une structure de fixation selon l'invention.

L'invention porte notamment sur un premier agencement donné pour fixation d'un équipement 1 selon l'invention dans au moins deux zones distinctes d'un véhicule automobile,
- l'agencement comprend un équipement 1 pourvu de deux éléments de liaison pour un montage en rotation de l'équipement et un élément de clippage mâle,
- au moins une zone donnée parmi les au moins deux zones distinctes est équipée d'une une structure de fixation comprenant un élément de clippage femelle, l'élément de clippage femelle présentant une ouverture pour collaborer avec une languette élastique d'un élément de clippage mâle,
- l'élément de clippage mâle de l'équipement 1 collabore avec un élément de clippage femelle de la structure de fixation de la zone donnée.

Par exemple, dans un mode de réalisation, le véhicule automobile 100 présente un agencement comprenant un volant 50, une planche de bord 60 équipée de deux clips femelles selon l'invention, et une tablette 1 équipée de deux clips mâles et présentant une ouverture 13 selon l'invention permettant de fixer la tablette 1 au volant 50. La tablette 1 peut ainsi être fixée en deux zones distinctes du véhicule, et un clip mâle de la tablette 1 collabore avec un clip femelle du tableau de bord.

L'invention porte également sur un deuxième agencement comprenant en outre une zone de fixation pourvue d'une une surface de guidage en rotation apte à guider un mouvement de rotation de l'équipement. Un tel agencement peut comprendre par exemple un volant 50 ou une planche de bord 60, ainsi qu'une structure de siège équipée d'une pièce de fixation 72, 73 telle que précédemment décrite.

L'invention porte également sur un troisième agencement présentant une caractéristique supplémentaire par rapport au deuxième agencement. La caractéristique supplémentaire porte sur un moyen de fixation de l'équipement 1 dans une position de rangement, le moyen de fixation étant obtenu par une collaboration entre une lamelle 171 de l'équipement 1 et une languette 728 d'une structure de fixation.

L'invention porte aussi sur un quatrième agencement présentant les caractéristiques du troisième agencement ainsi que des caractéristiques supplémentaires relatives à la fixation de la tablette dans une position de rangement P24. A cet effet, une lamelle 171 de l'équipement collabore avec une languette 728 de la structure de fixation 72, 73 pour fixer l'équipement dans une position de rangement P24. De plus, la position de rangement est maintenue par les éléments de liaison du premier type, c'est-à-dire les ergots cylindriques 141, 142 de l'équipement 1 collaborant avec les éléments de liaison du deuxième type, c'est-à-dire les gouttières 726, 736 de la structure de fixation 72, 73. La position de rangement P24 étant atteinte après une rotation de l'équipement autour du premier axe transversal 10 pour positionner l'équipement 1 dans une position sensiblement perpendiculaire à la direction de clippage X1.

L'invention porte aussi sur un cinquième agencement présentant les caractéristiques du quatrième agencement et précisant en outre un mode de réalisation d'un agencement permettant un rangement de l'équipement 1 sur une structure de siège. Dans ce mode de réalisation, la structure de fixation 72, 73 est fixée à une structure de siège du véhicule automobile 100, et la position de rangement P24 de l'équipement correspond à une position repliée de l'équipement 1 dans laquelle la surface principale 11, 12 de l'équipement est sensiblement parallèle à la structure de siège.

Un premier mode de montage de la tablette 1 sur le volant 50 est décrit en référence à la figure 8. Le premier montage s'effectue uniquement en dehors des phases de conduite du véhicule automobile 100. Le conducteur recule son siège et présente la tablette de sorte à placer la partie inférieure de la structure circulaire 51 du volant 50 à l'intérieur de l'évidement 13 de la tablette 1. L'évidement 13 est placé en appui sur trois points 511, 512, 513 de la structure circulaire 51, les points d'appui sur la tablette 1 étant matérialisés par les repères A, B et C visibles sur la figure 8. Un réglage de la hauteur du volant 50 peut être nécessaire pour placer le premier plan 11, 12 dans une position sensiblement horizontale.

Ainsi, selon le premier mode de montage de la tablette 1, les points d'appui A, B, C de la tablette 1 collaborent avec le volant de l'emplacement conducteur, pour fixer la tablette 1 (notamment le premier plan 11, 12) dans une position P3 sensiblement horizontale. La position P3 est ainsi maintenue lors de l'utilisation de la tablette 1 comme surface de dépose. Un usager peut alors exercer une force verticale dirigée vers le bas sur la surface de dépose sans que la tablette 1 ne s'extraie de la structure de fixation.

Lorsque la tablette 1 est fixée dans la position P3, son démontage s'effectue en exerçant un effort vertical dirigé vers le haut sur l'extrémité 110 du premier plan 11.

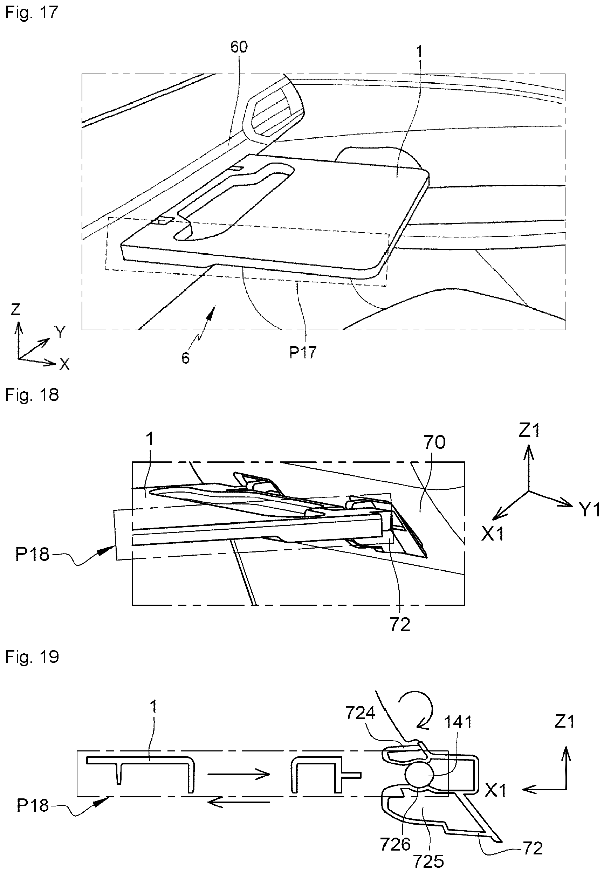

Un deuxième mode de montage de la tablette 1 sur la planche de bord 60 est décrit en référence aux figures 16 et 17. Le deuxième mode de montage est mis en oeuvre par un passager avant du véhicule automobile 100. La tablette 1 est présentée horizontalement face aux clips femelles 61, 62. Un effort est exercé par le passager avant sur la tablette 1 selon une direction opposée à l'axe X1. Les clips mâles 151, 152 de la tablette 1 sont ainsi insérés dans les clips femelles 61, 62 de la planche de bord 60. La languette élastique 1511, 1521 de chaque clip mâle 151, 152 est comprimée pour s'insérer dans les clips femelles 61, 62, notamment dans un trou des clips femelles. Sur la figure 17, les clips mâles 151, 152 ne sont plus visibles car ils sont complètement insérés dans les clips femelles 61, 62.

Ainsi, selon le deuxième mode de montage de la tablette 1, les clips mâles 151, 152 de la tablette 1 collaborent avec des clips femelles 61, 62 de la planche de bord 60 pour fixer le premier plan 11, 12 dans une position P17 sensiblement horizontale. La position P17 est ainsi maintenue lors de l'utilisation de la tablette 1 comme surface de dépose. Un usager peut alors exercer une force verticale dirigée vers le bas et d'intensité modérée sur la surface de dépose sans que la tablette 1 ne s'extraie de la structure de fixation.

Lorsque la tablette 1 est fixée dans la position P17, son démontage nécessite de réduire l'effort exercé par les zones 1512, 1522 de la tablette 1 sur la structure de fixation.

A cet effet, dans un mode de réalisation avantageux de la tablette 1 illustré par les figures 3 et 4, la languette élastique 1511, 1521 présente une zone d'appui 1513 1523. Lorsqu'un usager exerce un appui sur la zone 1513,1523 il diminue ou supprime l'effort exercé par la zone 1512, 1522, ce qui facilite le démontage de la tablette 1 hors de la structure de fixation.

Dans un mode de réalisation alternatif, illustré notamment par les figures 5 à 7, la languette élastique 1511, 1521 ne présente pas de zone d'appui 1513. 1523. Un appui soutenu exercé par un usager sur l'extrémité 110 de la tablette 1, dirigé vers le bas, et selon une direction perpendiculaire à la surface de dépose permet de réduire l'effort exercé par la zone 1512, 1522 sur la structure de fixation, et ainsi de désengager la tablette 1 de la structure de fixation.

Un troisième mode de montage de la tablette 1 sur une structure de siège 70 est décrit en référence aux figures 18 à 25. Le troisième mode de montage est mis en oeuvre par une ou plusieurs liaisons entre la tablette 1 et chacune des pièces de liaison 72, 73 de la structure de siège 70.

Le troisième mode de montage permet de placer la tablette selon trois positions distinctes P18, P20, P24.

Selon une première position P18 représentée par les figures 18 et 19, les ergots 141, 142 de la tablette 1 sont placés dans la première gouttière 726, 736. Dans cette position de la tablette 1, les clips mâles 151,152 sont à l'extérieur des clips femelles 721, 731, et ne bloquent pas le mouvement de rotation de la tablette 1 autour de l'axe 10.

Ainsi, selon la position P18, les deux ergots 141, 142 de la tablette 1 collaborent avec la première gouttière 726, 736 pour permettre un mouvement de rotation de la tablette 1 autour d'un axe 10 contenu dans un plan parallèle au premier plan 11, 12.

Pour placer la tablette 1 dans la première position P18, on la présente horizontalement face aux pièces de liaison 72, 73, puis on exerce un effort sur la tablette 1 selon une direction opposée à l'axe X1 jusqu'à ce que les ergots 141, 142 se placent dans les premières gouttières 726, 736. Pour démonter la tablette 1 alors qu'elle est placée dans la position P18, on exerce un effort sur la tablette 1 selon la direction de l'axe X1.

En remarque, la position P18 de la tablette 1 est une position transitoire de la tablette avant un montage, un démontage ou un rangement de la tablette 1.

Lors du montage de la tablette 1 sur une structure de siège 70, la première position P18 est suivie d'une deuxième position P20 représentée par les figures 20 à 23. La figure 20 est une vue en perspective de la tablette selon la deuxième position P20. La figure 21 est une coupe de la tablette 1 et d'une structure de fixation d'un siège 70, le plan de coupe coupant un ergot 141 selon un plan longitudinal perpendiculaire à la première face 11 de la tablette. La figure 22 est une coupe de la tablette 1 et d'une structure de fixation d'un siège 70, le plan de coupe coupant un clip mâle 151, 152 selon un plan longitudinal perpendiculaire à la première face 11 de la tablette.

La figure 20 montre, par comparaison avec la figure 19, que la tablette 1 a été insérée plus profondément dans la structure de fixation 72, 73, puisque les ergots 141, 142 ne sont plus visibles. Comme le montre la figure 21, les ergots 141, 142 de la tablette 1 sont maintenant placés dans la deuxième gouttière 727, 737 qui forme un volume de dégagement pour un ergot 141, 142, aucune contrainte n'étant alors exercée sur l'ergot 141, 142.

Comme cela est illustré par les figures 22 et 23, lorsque la tablette est dans la deuxième position P20, la liaison entre la tablette et la structure de siège 70 est mise en oeuvre par une liaison réalisée entre un clip mâle 151, 152 de la tablette 1 et un clip femelle 721, 731 de la pièce de liaison 72, 73 de la structure de siège 70.

Pour déplacer la tablette 1 de la position P18 à la position P20, on exerce un effort sur la tablette 1 selon une direction opposée à l'axe X1 jusqu'à ce que les clips mâles 151, 152 s'assemblent aux clips femelles 721, 731.

Ainsi, selon la deuxième position P20, les clips mâles 151, 152 de la tablette 1 collaborent avec le clip femelle 721 de la pièce de liaison 72 et le clip femelle 731 de la pièce de liaison 73 pour fixer le premier plan 11 dans une position P20 sensiblement horizontale.

De plus les figures 22 et 23 montrent une languette élastique 1511, 1521 d'un clip mâle 151, 152 de la tablette 1 collaborant avec le trou rectangulaire 722, 732 de la pièce de liaison 72, 73 pour maintenir la tablette dans la deuxième position P20.

Ainsi, selon la deuxième position P20, la languette élastique 1511, 1521 de chaque clip mâle 151, 152 collabore avec le trou rectangulaire 722, 732 de chaque pièce de liaison 72, 73 pour s'opposer au démontage de la tablette 1. La position P20 est ainsi maintenue lors de l'utilisation de la tablette 1 comme surface de dépose. Un usager peut alors exercer une force verticale dirigée vers le bas et d'intensité modérée sur la surface de dépose sans que la tablette 1 ne s'extraie de la structure de fixation.

Lorsque la tablette 1 est fixée dans la position P20, son démontage nécessite de réduire l'effort exercé par les zones 1512, 1522 de la languette élastique 1511, 1521 des clips mâles 151, 152 sur les clips femelles 721, 731. A cet effet, lorsque la languette élastique 1511, 1521 présente une zone d'appui 1513, 1523, un usager peut exercer un appui sur la zone d'appui 1513, 1523 pour diminuer ou supprimer l'effort exercé par la zone 1512, 1522, ce qui facilite le démontage de la tablette 1 hors de la structure de fixation. Alternativement, si la languette élastique 1511, 1521 ne présente aucune zone d'appui permettant à un usager d'interagir avec la languette élastique 1511, 1521, un appui soutenu sur l'extrémité 110 de la tablette 1, dirigé vers le bas et selon une direction perpendiculaire à la surface de dépose permet de réduire l'effort exercé par la zone 1512, 1522 sur la structure de fixation, et ainsi de désengager la tablette 1 des clips femelles tout en exerçant un effort de déplacement de la tablette 1 selon la direction X1. La tablette 1 se retrouve alors dans la position 18, puis peut être démontée selon la méthode précédemment décrite.

Lors du rangement de la tablette 1 sur une structure de siège 70, la première position P18 est suivie d'une troisième position P24 représentée par les figures 24 et 25. La figure 24 est une vue en perspective de la tablette selon la troisième position P24. La figure 25 est une vue en coupe de la tablette 1 et d'une structure de fixation d'un siège 70, le plan de coupe coupant une languette flexible 728, 738 disposée sur un volume inférieur 725, 735 de la pièce de liaison 72, 73.

Comme cela est illustré par les figures 24 et 25, lorsque la tablette 1 est dans la troisième position P24, la liaison entre la tablette 1 et la structure de siège 70 est mise en oeuvre par
- d'une part une liaison en rotation réalisée entre chaque ergot 141, 142 de la tablette 1 et la première gouttière 726, 736 de chaque pièce de liaison 72, 73, et
- d'autre part un appui de la languette flexible 728, 738 de chaque pièce de liaison 72, 73 sur les lamelles 171, 172 de la tablette 1.

En d'autres termes, l'appui des languettes flexibles 728, 738 sur les lamelles 171, 172 empêche la rotation de la tablette 1 en bloquant la tablette 1 dans une position définie par les languettes flexibles 728, 738.

Ainsi, selon la troisième position P24, les deux ergots 141, 142 et les deux lamelles 171, 172 de la tablette 1 collaborent avec les deux gouttières 726, 736 et les deux languettes flexibles 728, 738 pour fixer la tablette 1 selon un angle d'inclinaison A24 du premier plan 11, 12 par rapport à un plan horizontal, l'angle d'inclinaison A24 définissant une position de rangement P24 de la tablette 1.

Avantageusement, lorsque la tablette 1 est dans la position de rangement P24, le premier plan 11 est sensiblement parallèle à la structure de dossier 70, de sorte à limiter le volume occupé par la tablette 1.

Lorsque la tablette 1 est fixée dans la position P24, son démontage peut s'effectuer par appui sur les languettes flexibles 728, 738. Par simple rotation, la tablette 1 peut alors être manuellement placée selon la position P18 puis démontée selon une méthode précédemment décrite.

L'agencement 10 selon l'invention permet donc à un usager d'un véhicule automobile de disposer d'une tablette nomade, c'est-à-dire une tablette pouvant être utilisée dans différentes zones de montage se situant à l'intérieur et/ou à l'extérieur de l'habitacle du véhicule automobile 100.

L'agencement 10 fournit une surface de dépose pouvant être utilisée notamment pendant le déplacement du véhicule par un passager avant ou un passager arrière. La surface de dépose peut en outre être utilisée par le conducteur du véhicule uniquement lorsque le véhicule est à l'arrêt. En outre, l'agencement 10 répond aux critères de sécurité requis. En effet, dans toutes les zones de montage où la tablette est utilisable pendant le déplacement du véhicule, l'agencement 10 fournit des moyens de fixation de la tablette suffisamment robustes pour maintenir la tablette dans sa structure de fixation lors d'un choc.

De plus l'agencement 10 fournit un moyen de rangement pour la tablette 1 à l'arrière d'un siège.

Ainsi, grâce à l'agencement 10, l'usager dispose d'une surface de dépose facile à déplacer d'une zone de montage à une autre, et facile à ranger. De plus, la mise en oeuvre des modes de réalisation présentés est peu coûteuse.

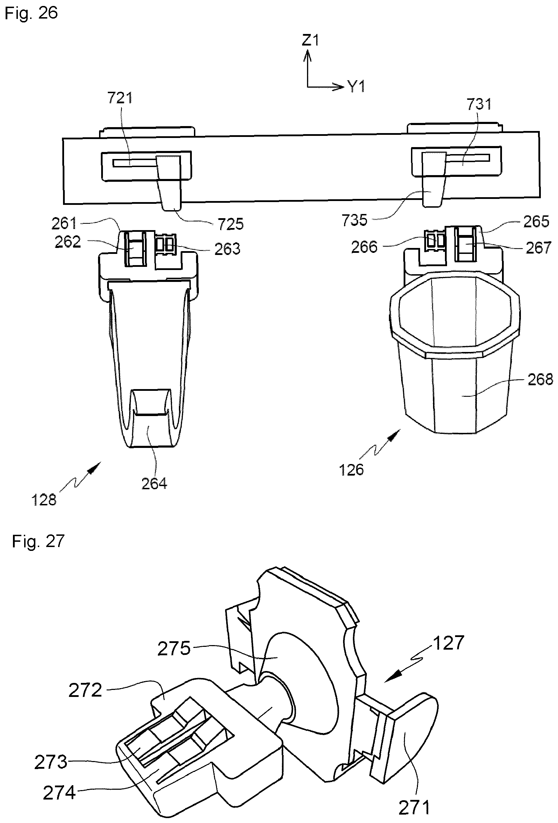

Dans un mode de réalisation, l'agencement 10 peut comprendre des équipements annexes 126, 127, 128, 129, illustrés par les figures 26 à 28. Les équipements annexes peuvent être, par exemple, un porte-gobelet 126, un support de téléphone 127, un crochet 128 ou un porte-cintre 129.

Les équipements annexes 126, 127, 128, 129 sont pourvus d'au moins un élément de fixation 261, 265, 272, 282 de type élément de clippage mâle, apte à collaborer avec un élément de clippage femelle 61, 62, 721, 731 d'une structure de fixation.

La figure 26 représente un premier et un deuxième équipements annexes 126, 128 aptes à collaborer avec une structure zone de montage telle que décrite par les figures 10 à 15.

Le porte-gobelet 126 et le crochet 128 sont chacun pourvus
- d'un élément de fixation 265, 261 de type élément de clippage mâle comprenant une languette élastique,
- d'un ergot cylindrique 266, 263, et
- d'une surface d'appui 267, 262 permettant d'abaisser la languette élastique de l'élément de clippage mâle.

L'ergot cylindrique 266, 263 permet la mise en oeuvre d'une liaison en rotation entre la structure de fixation et le porte-gobelet 126 ou entre la structure de fixation et le crochet 128, la rotation s'effectuant autour d'un axe de rotation défini par l'axe de l'ergot cylindrique 266, 263.

De plus, les clips 265 et 261 permettent respectivement une fixation par clippage du porte-gobelet 126 et du crochet 128 dans la structure de fixation.

Les clips 265 et 261 sont par ailleurs pourvus d'une surface d'appui 267, 262 (ou doigt d'indexage) permettant d'exercer un appui sur la languette élastique du clip, pour faciliter le démontage du porte-gobelet ou du crochet.

La figure 27 représente un support de téléphone portable 127 comprenant une liaison rotule 275 permettant d'articuler un cadre 271 sur lequel peut être attaché un téléphone portable. Le clip 272 présente deux languettes élastiques 273, 274 non pourvues de surface d'appui.

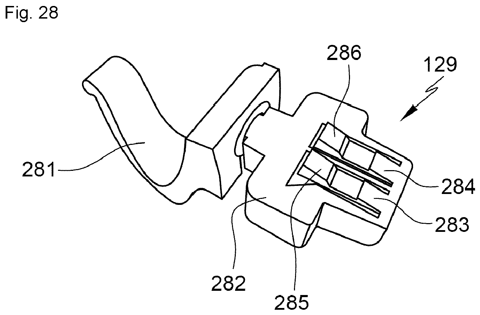

La figure 28 représente un porte-cintre 129 comprenant un crochet relié à un clip 282. Le clip 282 présente deux languettes élastiques 283, 284 pourvues d'une surface d'appui 285, 286, ou doigt d'indexage permettant d'exercer un appui sur les deux languettes élastiques du clip, pour faciliter le démontage du porte-cintre.

En résumé, dans un mode de réalisation, l'agencement 10 selon l'invention comprend au moins un deuxième équipement choisi parmi :
- un porte-gobelet comprenant un élément de clippage du premier type et élément de liaison du premier type ;
- un support de téléphone portable comprenant un élément de clippage du premier type et une liaison rotule pour supporter un cadre sur lequel peut être attaché un téléphone portable ;
- un porte-cintre comprenant un élément de clippage du premier type et optionnellement un élément de liaison du premier type et éventuellement un crochet.

Ainsi, grâce à l'agencement 10, l'usager a en outre la possibilité de fixer un ensemble d'équipements annexes dans des zones de montages diverses, comprenant par exemple,
- dans une zone de montage d'un emplacement passager avant, notamment sur une planche de bord,
- ou dans une zone de montage d'un emplacement de passager arrière, notamment à l'arrière d'un siège.

Tous les équipement annexes 126, 127, 128, 129 peuvent se fixer successivement au même endroit sur les mêmes structures de fixation d'un véhicule, ils ont donc des éléments de clippage compatibles.

## Revendications

1. Equipement (1) d'un véhicule automobile (100), l'équipement comprenant :
- au moins deux éléments de liaison d'un premier type (141, 142) alignés selon un premier axe transversal (10), destinés à un montage en rotation de l'équipement (1) autour du premier axe transversal (10) ;
- au moins un élément de clippage d'un premier type (151, 152) agencé selon une direction de clippage (X1) perpendiculaire au premier axe transversal (10).

2. Equipement selon la revendication précédente, **caractérisé en ce que** l'élément de clippage du premier type (151, 152) comprend une languette élastique (1511, 1521) s'étendant selon la direction de clippage (X1) entre une première extrémité fixe (1531, 1532) et une deuxième extrémité libre (1541, 1542), la deuxième extrémité (1541, 1542) étant mobile en rotation autour de la première extrémité (1531, 1532) selon un deuxième axe transversal (20) parallèle au premier axe transversal (10).

3. Equipement selon la revendication précédente, **caractérisé en ce que** la deuxième extrémité (1541, 1542) est plus distante du premier axe transversal (10) que la première extrémité (1531, 1532),
**en ce que** la deuxième extrémité (1541, 1542) prend une première position clippée fixe, et une deuxième position non clippée mobile et/ou **en ce que** la deuxième extrémité (1541, 1542) comprend une surface d'appui (1513, 1523) permettant un actionnement par un utilisateur pour un déclippage de l'élément de clippage du premier type (151, 152).

4. Equipement selon l'une des revendications précédentes, **caractérisé en ce qu'**il comprend une ouverture (13) adaptée pour un coincement de l'équipement sur un volant (5) d'un véhicule automobile (100).

5. Equipement selon l'une des revendications précédentes, **caractérisé en ce qu'**il est une tablette utilisable en tant que surface de dépose (11, 12) pour un usager du véhicule automobile (100), et **en ce que** la tablette s'étend dans un plan principal (1000) comprenant le premier axe transversal (10).

6. Equipement selon la revendication précédente **caractérisé en ce qu'**il comprend deux extensions selon la direction de clippage (X1), les extensions comprenant des éléments de liaison du premier type (141, 142) et des éléments de clippage du premier type (151, 152).

7. Structure de fixation (61, 62, 72, 73) pour véhicule automobile, comprenant un élément de clippage d'un deuxième type (61, 62, 721, 731), adapté pour collaborer avec un élément de clippage du premier type (151, 152) d'un équipement (1) selon l'une des revendications précédentes.

8. Structure de fixation (61, 62, 72, 73) selon la revendication précédente, **caractérisée en ce qu'**elle comprend en outre des éléments de liaison d'un deuxième type (726, 736) adaptés pour collaborer avec des éléments de liaison du premier type d'un équipement (1) selon l'une des revendications 1 à 7.

9. Agencement (10) pour fixation d'un équipement dans au moins deux zones distinctes d'un véhicule automobile, **caractérisé en ce que**
- l'agencement comprend un équipement (1) selon l'une des revendications 1 à 6, et
- au moins une zone donnée parmi les au moins deux zones distinctes est équipée d'une structure de fixation selon la revendication 7 ou 8.

10. Agencement (10) pour fixation selon la revendication précédente, **caractérisé en ce que**
- au moins une zone de fixation comprend une structure de fixation selon la revendication 8, et
- les éléments de liaison du premier type (141, 142) de l'équipement (1) collaborent avec les éléments de liaison du deuxième type (726, 736) de la structure de fixation (72, 73).

11. Agencement (10) selon la revendication précédente, **caractérisé en ce qu'**une lamelle de l'équipement (171, 172) collabore avec une languette (728, 738) de la structure de fixation (72, 73) pour fixer l'équipement (1) dans une position de rangement (P24),
la position de rangement (P24) étant maintenue par les éléments de liaison du premier type (141, 142) de l'équipement (1) collaborant avec les éléments de liaison du deuxième type (726, 736) de la structure de fixation,
la position de rangement (P24) étant atteinte après une rotation de l'équipement (1) autour du premier axe transversal (10) pour le positionner dans une position inclinée relativement à la direction de clippage (X1).

12. Agencement (10) selon la revendication précédente, **caractérisé en ce que** la structure de fixation (72, 73) est fixée à une structure de siège du véhicule automobile (100), et **en ce que** la position de rangement (P24) de l'équipement correspond à une position repliée de l'équipement dans laquelle la surface principale (11, 12) de l'équipement (1) est sensiblement parallèle à la structure de siège.

13. Agencement selon l'une des revendications 9 à 12, **caractérisé en ce qu'**il comprend au moins un deuxième équipement choisi parmi :
- un porte-gobelet (126) comprenant un élément de clippage du premier type (265) et élément de liaison du premier type (266) ;
- un support de téléphone portable (127) comprenant un élément de clippage du premier type (272) et une liaison rotule (275) pour supporter un cadre (271) sur lequel peut être attaché un téléphone portable ;
- un porte-cintre (128, 129) comprenant un élément de clippage du premier type (261, 282) et optionnellement un élément de liaison du premier type (263) et éventuellement un crochet (264, 281).
